# NEW EUROPEAN PATENT SPECIFICATION

(11) **EP 2 072 563 B2**
(45) Date of publication and mention of the opposition decision: **29.07.2015**
(45) Mention of the grant of the patent: 31.08.2011
(21) Application number: 07024645.9
(22) Date of filing: 19.12.2007
(51) Int. Cl.: C08J 9/00, C08L 67/02, C08L 69/00

(54) **Polymer blend for thermoplastic cellular materials**
Polymermischung für thermoplastische zelluläre Materialien
Mélange de polymères pour matériaux cellulaires thermoplastiques

(43) Date of publication of application: 24.06.2009
(73) Proprietor: Armacell Enterprise GmbH & Co. KG, 12529 Schönefeld OT Waltersdorf (DE)
(72) Inventor: Li, Jie, Dr., 4800 Zofingen (CH); Gräter, Horst, Dr., 48155 Münster (DE); Meller, Mika, Dr., 02880 Veikkola (FI)
(74) Representative: von Füner, Nicolai

(56) References cited:
- EP-A- 0 494 445
- EP-B1- 0 801 108
- WO-A1-99/47603
- WO-A2-96/18672
- JP-A- H11 140 210
- US-A- 4 466 933
- US-A- 4 469 861
- US-A- 4 587 272
- US-A- 4 833 174
- US-A- 6 025 405
- US-A- 6 025 405
- US-A- 6 080 824
- US-A- 6 100 307
- US-A1- 2004 001 946
- US-B1- 6 409 948
- US 2009 163611 A1 (US-FAMILIENMITGLIED ZUM STREITPATENT)
- DR. L. BOTTENBRUCH ET AL.: 'Polycarbonate Polyacetale Polyester Celluloseester', vol. 168, part 171 1992, CARL HANSER VERLAG, MÜNCHEN - WIEN pages 168 - 171
- Datenblatt zu Airex T91 vom Juli 2006
- Zertifikat für ArmaFORM PET 100 und 150 der Det Norske Veritas (DNV)
- Datenblatt CALIBRE 201-10
- Datenblätter Makrolon 3208 und Makrolon 1143
- S. R. MURFF ET AL.: 'Thermal and Mechanical Behavior of Polycarbonate-Poly(ethylene Terephthalate) Blends' JOURNAL OF APPLIED POLYMER SCIENCE vol. 29, 1984, pages 3231 - 3240
- X. Y. CHEN ET AL.: 'A preleminary Study of Blends of Bisphenol A Polycarbonate and Poly(ethylene terephthalate)' BRITISH POLYMER JOURNAL vol. 17, no. 4, 1985, pages 347 - 353
- N. FARIDI ET AL.: 'Solubility Measurements of Blowing Agents in Polyethylene Terephthalate' JOURNAL OF CELLULAR PLASTICS vol. 43, September 2007, pages 345 - 355
- J. L. THORNE: 'Thermoplastic Foams', 1996, SHERWOOD, LONDON page 174
- "Der Zylinder", VHB-Grundlagen der Schulgeometrie, Universität Erlangen, internet-citation, no publication date
- Dr. Christian Groß, "Didatik der Geometrie 9: Raumgeometrie" Universität Augsburg, Sommersemester 2008, pages 3,4,7,8,11,12
- "Zylinder", Wikipedia, internet citation, pages 1-4, no publication date
- L. J. GIBSON ET AL.: 'Cellular Solids, Structure and Properties', vol. 2, 1997, CAMBRIDGE UNIVERITY PRESS pages 175-177 - 200-201
- Diagramm "Compression Strength kommerzieller PET Schaumstoffe im Vergleich mit den Werten in EP20072563"
- "Airex® T92", Data Sheet, Airex AG, August 2013, page 1-3
- "Armacell, ArmaFORM PET/W AC", technical date, Armacell Benelux S.A., March 2014, page 1
- "Gurit", mechanical performance sheet, page 2, no publication date

## Description

The current invention describes foamed thermoplastic cellular products obtained by processing a polymer blend. Such foamed materials exhibit much better mechanical properties than cellular one comprised of pure homo- or copolymer resin.

The foaming processes to produce low-density polyethylene terephthalate (PET) foam products are currently mainly realized by using a tandem extrusion line (consisting of a twinscrew extruder with relatively small screw diameters as primary extruder and a single extruder with much bigger screw diameters as cooling extruder) or a twinscrew extruder and by adding physical blowing agent (CO₂, N₂ or HFCs etc.) and nucleation agent (Talc for instance) into PET pure resin. Different shaping tooling can be used in such processes. Despite the high-viscosity of PET raw material (I.V. mostly more than 1.2 dl/g), the mechanical properties are not satisfactory: The compression strengths of PET foams produced this way and available on market are for example not higher than 1.3 and 2.0 MPa at density of 100-110 and 150-160 kg/m³ respectively, measured in the extrusion direction. The shear elongation at break on the other hand is not bigger than 2.5% at a compression strengths 1.3 and 2.0 MPa for density of 100-110 and 150-160 kg/m³ respectively. In many applications such as construction, yacht building or wind turbine manufacturing, higher mechanical values of low-density PET foam guarantee a better performance at end use, more secure application and longer lifetime. However, more markets could be explored with tougher foams.

The main reason for the relatively poor product properties is the sensitivity of PET to thermal or thermooxidative degradation during the processing. This degradation leads to further reduction in MW and the properties of final foamed products. The high-molecular PET resin is degraded at the process because of high shearing, which contributes to higher shear stress in the extrusion line. On the other hand, the unsatisfactory mechanical values are caused partially by bigger cells in center of a PET foam product. In the all patents [1-10] or reports [11] published in the past, big size foamed PET extrudates (thickness bigger than 40mm and width more than 100mm) which feature better mechanical properties than mentioned above can not be produced by processing a pure polymer in the recipe or by a standard extrusion process described before up to date.

The overall objective of this invention is to increase the mechanical values of the said PET foam products by blending PET resins and modifying the extrusion line.

Foam extrusion of polyester resins to produce low-density rigid cellular structures is a cost-effective method. The low-density cellular polyester materials made by applying physical blowing agent show many attributes of light core materials: particularly toughness, rigidity, high-temperature resistance, dimensional stability and recyclability.

One of the most cost-effective pathways to improve material performance is to use polymer blends instead of virgin polymer. The polymer blending is applied to modify the properties of one polymer by adding a second thermoplastic material. A polymer blend is defined as a mixture of two or more polymers. According to [12, 13], the term "polymer blend" is restricted to systems comprising at least 2 wt% of the second polymer. Below this level, the second phase is considered to be an additive. Usually, blending polymers is motivated to compensate for a specific weakness of a given primary material. Blend of PET/PC as compact material has been reported to have a better heat resistance [14].

The present invention relates to a high-temperature resistant, rigid, but flexible and low density foamed cellular material having a density lower than 200 kg/m³ according to ISO 845 and comprised of PET/PC blend consisting of:
a) from 80 to 98 weight percent of high viscosity PET (I.V.=1.0-1.9 dl/g)
b) from 2 to 20 weight percent of PC with an average MW higher than 4000 g/mol,
wherein the cellular material has a shear elongation at break from 3.5 to 30% according to ISO 1922.

In the current invention, homo- and copolyester PET were blended with polycarbonate (PC) (1-20 wt%). The PET/PC blend was fed into twinscrew extruders and mixed with CO₂ or HFC-152a and nucleate to be foamed to low-density PET foam boards (p < 200 kg/m³, measured according to ISO 845). It has been found in this invention that adding PC into PET resin increases the melt pressure in extruder first of all. This might modify positively the gas solubility and diffusion. Furthermore, the melt strength is improved and a better control of the nucleation and growth mechanisms is achieved. The foam structure of the PET/PC blend is much more homogenous due to a better strain hardening effect and an improved control of closed/open cell content in comparison with PET pure resin as raw material. The most important results of processing the PET/PC blend was surprisingly seen in the dramatic increase in rigidity (the compression strength > 1.55 and 2.2 MPA at p =100-110 and 150-160kg/m³ respectively, measured after extrusion according to ISO 844). In addition, the flexibility can be improved from below 2.5% to more than 3.5% (shear elongation at break according to ISO 1922).

Increase in melt pressure in extruder and strain hardening can also be detected if practicing a reactive extrusion of the gas-charged PET/PC blend. In this case, PET is mostly a low-viscous resin (PET regrinds or bottle grade both with I.V. ≤0.8 dl/g, operating according to ASTM 4603) and the same PC grade is processed. The foam product of a PET/PC blend system which is foamed by reactive extrusion is therefore more advantageous than one of pure PET resin.

It is well-known that melt temperature over cross-section is not homogenous at the extruder exit. A cooling extruder as a dynamic mixer or a static mixer is normally used to compensate for a uniform temperature profile of melt over the cross-section. In a further study, a constellation of twinscrew extruder, melt cooler as heat exchanger and static mixer provides a much more homogenous melt system than the equipment mentioned before. Macro cells can be reduced and the mechanical properties (compression and shear strength e.g.) further improved.

In all of above described processes, a physical blowing agent may be used for foaming (often referred to as "gas") and is typically carbon dioxide (C0₂), Nitrogen (N₂), alcohol, ketons, methylformamide, hydrofluorocarbon (for example HFC-152a or HFC-134a) or a hydrocarbon (such as n-hexane, isopentane, cyclopentane and n-heptane), or a gas mixture of above gases. The nucleate is generally talc, but alternative nucleate types can be used as well.

Beside nucleation and blowing agents, it is also possible to employ flame retardants such as halogenated, charforming or water-releasing (like phosphorus-containing) compounds and UV stabilizers in the recipes.

### Examples of PET/PC foam extrusions

The following examples are given to illustrate and not to limit the invention.

### Comparative example 1

The extruder used in this example was BC180, a co-rotating twin-screw extruder of BC Foam with Dₘₐₓ=180mm and Length=28D. The twin-screw extruder was attached with a static mixer and the extrusion tooling consisted of a block adapter and a shaping die. 500kg/h of polyethylene terephthlate (PET), a PET homopolymer Cobitech 0 of MG with I.V.=1.25 dl/g (according to ASTM 4603), were fed into the extruder and foamed with help of talc as nucleate and CO₂ or HFC 152a as physical blowing agent to PET boards. The melt system flowed through the Sulzer mixer where the melt system was homogenized and cooled down to a certain temperature about 240°C. The RMP of the extruder was set to 14 (1/min.) and the throughput of PET was 500 kg/h. The pull-off speed was 1.5-2.0 m/min.

The extrusion parameters are listed as following:

**Tab. 01: Process parameters**

| Parameter | Trial 1 | Trial 2 |
|---|---|---|
| PET flow rate (kg/h) | 500 | 500 |
| Nucleate percentage (%) | 1.0 | 1.0 |
| Gas type | CO₂ | HFC 152a |
| Gas content (wt%) | 0.74 | 1.7 |
| Melt temperature Tₘ (°C) | 240 | 237 |
| Melt pressure p_{d} (bar) | 45 | 48 |
| RPM (1/min) | 14 | 14 |
| Pulling speed (m/min) | 2.0 | 2.0 |

The melt temperature and pressure were measured at the block adapter.

The foam product could be produced, but there were a lot of macro cells (bigger than 1 mm) in middle of the boards (630X45mm). The compression strength was measured in extrusion direction of the foam extruded sample. The shear testing was performed by shearing the sample surface which is perpendicular to the extrusion direction. The mechanical properties of foamed PET boards are demonstrated in Tab. 2:

**Tab. 2: PET foam properties**

| Parameter | Trial 1 | Trial 2 |
|---|---|---|
| PET foam density (kg/m³) | 156 | 114 |
| Cell structure | Macro cells visible | Macro cells visible |
| Compression strength (MPa) | 1.24 | 0.73 |
| Shear strength (MPa) | 1.0 | 0.55 |

### Comparative example 2

The foam extrusion of comparative example 1 was repeated with the difference that a copolymer PET Cobitech 2 of MG with I.V.=1.25 dl/g (according to ASTM 4603) was processed. The process parameters were also a little different:

**Tab. 3: Process parameters**

| Parameter | Trial 1 | Trial 2 |
|---|---|---|
| PET throughput (kg/h) | 400 | 430 |
| Nucleate percentage (wt%) | 0.7 | 1.2 |
| Blowing agent type | CO₂ | R152a |
| Gas content (wt%) | 0.8 | 1.8 |
| Melt temperature Tₘ (°C) | 239 | 240 |
| Melt pressure p_{d} (bar) | 60 | 60 |
| RPM (1/min) | 12 | 12 |
| Pulling speed (m/min) | 2.8 | 3.8 , |

Because of a faster pulling speed the thickness of PET foam boards is below 30mm after extrusion. The rigidity of PET foamed board is similar to the foam made of PET Cobitech 0:

**Tab. 4: PET foam properties**

| Parameter | Trial 1 | Trial 2 |
|---|---|---|
| PET foam density (kg/m³) | 147 | 112 |
| Cell structure | Macro cells visible | Macro cells visible |
| Compression strength (MPa) | 1.37 | 0.71 |

### Example 1

The foam extrusion of comparative example 1 was repeated with the difference that PC (PC Calibre™ 603-3 of Dow Chemicals: a branched polycarbonate resin and equipped with a UV stabilization package) was added to the homopolymer PET Cobitech 0. HFC 152a was employed as physical blowing agent for a low-density foam. The PET/PC blend was fed into the twinscrew extruder. 2.7-6.0 wt% PC in PET/PC blend caused a pressure increase by about 80bar in the extruder. The total throughput had to be dropped to 380 kg/h to reduce the melt pressure in extrusion line and keep the pressure of melt in block adapter to 65 bar:

By processing the PET/PC polymer blend the cell growth was better controlled despite more extrudate expansion. The cell structure has been more uniform and macro cells were reduced dramatically. The properties of foamed PET/PC board were able to be increased to:

**Tab. 5: PET/PC foam properties**

| Parameter | Value |
|---|---|
| Foam density (kg/m³) | 110 |
| Cell structure | More uniform |
| Compression strength (MPa) | >1.55 |
| Shear strength (MPa) | 0.85 |
| Shear elongation at break | > 3.5% |

### Example 2

50 kg/h homopolymer PET Cobitech 0 of MG was mixed with 2.5-6.0 wt% PC of above grade and fed into a twinscrew co-rotating extruder LMP 90 of LMP, which was connected with a cooling/mixing unit comprising a heat exchanger section and a static mixer, followed by a multihole plate. The diameter of screw was 90mm and the length/diameter ratio was 30D. CO₂ was used as blowing agent and 0.7 wt% talc acted as nucleate.

In comparison to pure PET resin Cobitech 0, the melt pressure of PET/PC blend was higher and a foamed material with a density of 150 kg/m³ was obtained with closed cells. The cellular structure could also be improved again. Compression strength of 2.4 MPa could be measured at the foamed PET/PC sample in extrusion direction.

### Example 3

At the extrusion line of example 2 , a reactive extrusion was carried out, with the difference that a Sulzer mixer was employed this time. In this trial, 55 kg/h PET Cobitech 0 was process with and without PC of the same grade as the secondary component, but with help of a epoxy-based chain extender of Clariant, CESA Chain-Extender NCA0025531, which should be in position to stabilize or even increase the I.V. of polyester melt during extrusion process.

The recipe, process parameters and the process behavior are summarized in following table:

**Tab. 6: Process parameters and process behavior**

| Parameter | PET pure resin | PET/PC blend |
|---|---|---|
| PET resin | Cobitech 0 | Cobitech 0 |
| PC content (wt%) | 0 | 2.0 |
| Talc as nucleate (wt%) | 0.8 | 0.8 |
| Chain extender (wt%) | 0.5 | 0.5 |
| CO₂ as blowing agent (wt%) | 0.73 | 0.73 |
| Foam density (kg/m³) | 154 | 147 |
| Melt pressure at extruder exit (bar) | 113 | 180 |
| Melt pressure at die (bar) | 43 | 67 |

As demonstrated in Tab. 7, there was a big difference in melt pressure at extruder exit and at multihole die when processing PET/PC blend in the twinscrew extruder. The pressure increase with addition of PC in recipe indicates improvement of melt strength and a better controlled cell growth. More homogenous foam, a better foamability and better toughness/rigidity could be expected with PET/PC blend in this reactive foam extrusion.

### Literature

1. Huggard M. T., US 4,462,947 A1 (1982)
2. Huggard M. T., US 4,466,933 A1 (1984)
3. Hayashi, M., et al, US 5,000,991 A1 (1988)
4. Hayashi, M., et al, EP 0372846 A2 (1989)
5. Muschiatti L., US 5,229,432 A1 (1992)
6. Al Ghatta, H., et al, US 5,422,381 (1994)
7. EP 868 304405S (1994)
8. Al Ghatta, H., et al, EP 0866089 B1 (1994)
9. Harfmann, W.R., US 5681865 A1 (1996)
10. Ishiwatari, S., US 6254977 B1 (1998)
11. Lee S.-T., Foam Extrusion - Principle and Practice, Technomic Publiching C., Inc. (2000)
12. Ultracki L.A., Commercial Polymer Blends, Chapman & Hall (1998)
13. Gendon R., Thermoplastic Foam Processing - Principle and Development, CRC Press (2005)
14. Ma D.Z., et all., Compatibilizing effect of transesterification product between components in bisphenol-a polycarbonate/poly(ethylene terephthalate) blend, J. Polym. Sci. Part B: Polym. Phys. Ed. 37, 2960 (1999)

## Claims

1. High-temperature resistant, rigid, but flexible and low density foamed cellular material having a density lower than 200 kg/m³ according to ISO 845 and comprised of a PET/PC blend consisting of:
a) from 80 to 98 weight percent of high viscosity PET (I.V.=1.0-1.9 dl/g)
b) from 2 to 20 weight percent of PC with an average MW higher than 4000 g/mol,
wherein the cellular material has a shear elongation at break from 3.5 to 30% according to ISO 1922.

2. The foamed material according to claim 1, wherein the PET/PC blend contains 5 weight percent of PC.

3. The foamed material according to any of claims 1 to 2 having a compression strength bigger than 1.3 MPa.

4. The foamed material according to any of claims 1 to 2 having a shear strength bigger than 0.80 MPa.

5. Cellular articles obtained from the foamed material of any of claims 1 to 2.

6. An extrusion method for producing a foam according to any of the preceding claims comprising steps of:
a. feeding polymers and additives into an extruder and melting the melt system
b. injecting and mixing a blowing agent with the molten polymer system in the extruder
c. cooling and further homogenizing through a heat exchanger, followed by a static mixer
d. extruding the melt mixture through a strand or flat die
e. shaping the extrudate with the help of a calibrator whose shape and dimension are fixed or adjustable
f. air cooling the extrudate after calibration.

7. A batch process for producing a foam according to any of claims 1 to 4.

## Patentansprüche

1. Hochtemperaturbeständiger, steifer, jedoch flexibler und niedrige Dichte aufweisender geschäumter Schaumstoff mit einer Dichte von unter 200 kg/m³ gemäß ISO 845, umfassend ein PET/PC-Gemisch, bestehend aus:
a) 80 - 98 Gew.-% eines hohe Viskosität aufweisenden PET (I.V.=1.0-1.9 dl/g),
b) 2 - 20 Gew.-% eines PC mit einem durchschnittlichen Molekulargewicht von über 4000 g/mol,
wobei der Schaumstoff eine Scherbruchdehnung von 3.5 - 30 % gemäß ISO 1922 aufweist.

2. Geschäumtes Material nach Anspruch 1, bei dem das PET/PC-Gemisch 5 Gew.-% PC enthält.

3. Geschäumtes Material nach einem der Ansprüche 1 bis 2, mit einer Druckfestigkeit von über 1.3 MPa.

4. Geschäumtes Material nach einem der Ansprüche 1 bis 2, mit einer Scherfestigkeit von über 0.80 MPa.

5. Schaumerzeugnisse, erhalten aus dem geschäumten Material nach einem der Ansprüche 1 bis 2.

6. Extrusionsverfahren zur Erzeugung eines Schaums nach einem der vorhergehenden Ansprüche, das folgende Stufen umfasst:
a. Zufuhr der Polymere und Additive zu einem Extruder und Schmelzen des Schmelzsystems
b. Einspritzen und Mischen eines Treibmittels mit dem geschmolzenen Polymersystem im Extruder
c. Abkühlung und weitere Homogenisierung durch einen Wärmetauscher und einen nachfolgenden statischen Mischer
d. Extrusion des geschmolzenen Gemisches durch eine Strang- oder Flachdüse
e. Formung des Extrudats mit Hilfe eines Kalibrators, dessen Form und Abmessungen fixiert oder einstellbar sind
f. Luftkühlung des Extrudats nach der Kalibrierung.

7. Diskontinuierliches Verfahren zur Erzeugung eines Schaums nach einem der Ansprüche 1 bis 4.

## Revendications

1. Mousse alvéolaire résistante aux hautes températures, rigide, mais souple et de faible densité ayant une densité inférieure à 200 kg/m³ selon la norme ISO 845 et composée d'un mélange de PET/PC constitué de :
a) de 80 à 98 pour-cent en poids d'un PET de viscosité élevée (I.V. = 1,0 à 1,9 dl/g)
b) de 2 à 20 pour-cent en poids de PC avec un MW moyen supérieur à 4 000 g/mole, le matériau alvéolaire ayant un allongement à la rupture sous cisaillement de 3,5 à 30 % selon la norme ISO 1922.

2. Mousse selon la revendication 1, le mélange de PET/PC contenant 5 pour-cent en poids de PC.

3. Mousse selon l'une quelconque des revendications 1 à 2 ayant une résistance à la compression supérieure à 1,3 MPa.

4. Mousse selon l'une quelconque des revendications 1 à 2 ayant une résistance au cisaillement supérieure à 0,80 MPa.

5. Articles de type alvéolaire obtenus à partir de la mousse selon l'une quelconque des revendications 1 à 2.

6. Procédé d'extrusion pour produire une mousse selon l'une quelconque des revendications précédentes comprenant les étapes de :
a. alimentation des polymères et des additifs dans une extrudeuse et fusion du système fondu
b. injection et mélange d'un agent de soufflage avec le système de polymère fondu dans l'extrudeuse
c. refroidissement et homogénéisation supplémentaire à l'aide d'un échangeur thermique, suivi d'un mélangeur statique
d. extrusion du mélange fondu à travers une filière à brin ou plate
e. mise en forme de l'extrudat à l'aide d'un calibreur dont la forme et la dimension sont fixes ou ajustables
f. refroidissement à l'air de l'extrudat après le calibrage.

7. Procédé discontinu de production d'une mousse selon l'une quelconque des revendications 1 à 4.
